# EUROPEAN PATENT APPLICATION

(11) **EP 4 749 385 A1**
(43) Date of publication of application: **27.05.2026**
(21) Application number: 23950568.8
(22) Date of filing: 27.12.2023
(51) Int. Cl.: G05D 3/20

(54) **ANGLE ADJUSTMENT METHOD AND APPARATUS FOR SOLAR DEVICE, AND ELECTRONIC DEVICE AND MEDIUM**

(30) Priority: 30.08.2023 CN 202311107737
(71) Applicant: Zhejiang Uniview Technologies Co., Ltd., Hangzhou, Zhejiang 310051 (CN)
(72) Inventor: CHEN, Zhiqiang, Hangzhou, Zhejiang 310051 (CN)
(74) Representative: HGF
(86) International application number: PCT/CN2023/142214
(87) International publication number: WO 2025/044003

(57) **Abstract**

Provided are an angle adjustment method and apparatus for a solar device, an electronic device (10), and a medium. The angle adjustment method for a solar device includes the following: In a current adjustment period, a current solar angle is determined based on location information sent by a master device in a device cluster (S110), where devices in the device cluster are each a solar device and include the master device and at least one slave device; a solar deflection angle is determined based on a reference solar angle and the current solar angle (S120); and the solar deflection angle is sent to the device cluster so that solar devices in the device cluster perform angle adjustment based on the solar deflection angle (S130).

## Description

The present application claims priority to Chinese Patent Application No. 202311107737.9 filed with the China National Intellectual Property Administration (CNIPA) on Aug. 30, 2023, the disclosure of which is incorporated herein by reference in its entirety.

### TECHNICAL FIELD

The present application relates to the field of computer technology, for example, to an angle adjustment method and apparatus for a solar device, an electronic device, and a medium.

### BACKGROUND

With the continuous expansion of image acquisition-related services, image acquisition devices are gradually being used to perform related tasks in remote environments. However, it is difficult to implement projects such as building power stations and laying power lines in remote environments, which affects the application of image acquisition devices. In this case, image acquisition devices integrated with solar devices have been adopted. To improve the utilization rate of solar energy, solar panels are generally fixed at positions where the duration of sunlight is long and the illumination intensity is high. However, during certain periods, the angle between the solar panel of the solar device and the sunlight is not optimal, and the intensity of sunlight received by the solar panel is not high.

To solve the above problem, if a processor is disposed in each solar device to calculate the angle to be adjusted in real time, or if other additional devices are assembled to perform angle determination and adjustment, significant energy consumption and high costs will be incurred.

### SUMMARY

Embodiments of the present application provide an angle adjustment method and apparatus for a solar device, an electronic device, and a medium, to reduce power consumption and cost for angle adjustment of the solar device.

According to one aspect of the present application, an angle adjustment method for a solar device is provided. The method includes the following: in a current adjustment period, determining a current solar angle based on location information sent by a master device in a device cluster, where devices in the device cluster are each a solar device and include the master device and at least one slave device; determining a solar deflection angle based on a reference solar angle and the current solar angle; and sending the solar deflection angle to the device cluster so that solar devices in the device cluster perform angle adjustment based on the solar deflection angle.

According to another aspect of the present application, an angle adjustment apparatus for a solar device is provided. The apparatus includes a current solar angle determination module, a solar deflection angle determination module, and an angle adjustment module. The current solar angle determination module is configured to, in a current adjustment period, determine a current solar angle based on location information sent by a master device in a device cluster, where devices in the device cluster are each a solar device and include the master device and at least one slave device. The solar deflection angle determination module is configured to determine a solar deflection angle based on a reference solar angle and the current solar angle. The angle adjustment module is configured to send the solar deflection angle to the device cluster so that solar devices in the device cluster perform angle adjustment based on the solar deflection angle.

According to another aspect of the present application, an electronic device is provided. The electronic device includes at least one processor and a memory communicatively connected to the at least one processor. The memory stores a computer program executable by the at least one processor. The computer program is configured to, when executed by the at least one processor, cause the at least one processor to perform the angle adjustment method for a solar device according to any embodiment of the present application.

According to another aspect of the present application, a computer-readable storage medium is provided. The computer-readable storage medium is configured to store computer instructions for causing a processor, when executed, to implement the angle adjustment method for a solar device according to any embodiment of the present application.

According to the technical solutions of the embodiments of the present application, in a current adjustment period, a current solar angle is determined based on location information sent by a master device in a device cluster, where devices in the device cluster are each a solar device and include the master device and at least one slave device; a solar deflection angle is determined based on a reference solar angle and the current solar angle; and the solar deflection angle is sent to the device cluster so that solar devices in the device cluster perform angle adjustment based on the solar deflection angle. In the preceding solutions, the solar deflection angle can be determined based on location information sent by the master device, and angles of all solar devices in the entire device cluster can be uniformly adjusted based on the solar deflection angle, without the need to configure a processor or an additional device in each solar device for angle adjustment and calculation, thereby saving hardware cost and energy consumption.

### BRIEF DESCRIPTION OF DRAWINGS

The accompanying drawings used in the description of the embodiments will be briefly described below. Apparently, the accompanying drawings described below illustrate part of the embodiments of the present application, and those of ordinary skill in the art may obtain other accompanying drawings based on the accompanying drawings described below on the premise that no creative work is done.
FIG. 1 is a flowchart of an angle adjustment method for a solar device according to embodiment one of the present application.
FIG. 2 is a flowchart of an angle adjustment method for a solar device according to embodiment two of the present application.
FIG. 3 is a flowchart of an angle adjustment method for a solar device according to embodiment three of the present application.
FIG. 4 is a diagram illustrating the structure of an angle adjustment apparatus for a solar device according to embodiment four of the present application.
FIG. 5 is a diagram illustrating the structure of an electronic device according to embodiment five of the present application.

### DETAILED DESCRIPTION

The technical solutions in the embodiments of the present application are described below in conjunction with the drawings in the embodiments of the present application. Apparently, the embodiments described below are part of the embodiments of the present application. Based on the embodiments of the present application, all other embodiments obtained by those of ordinary skill in the art without creative work are within the scope of the present application.

It is to be noted that terms such as "first", "second", "third", "fourth", "actual", and "preset" in the description, claims, and drawings of the present application are used to distinguish between similar objects and are not necessarily used to describe a particular order or sequence. It is to be understood that the data used in this manner is interchangeable where appropriate so that the embodiments of the present application described herein may also be implemented in a sequence other than those illustrated or described herein. Additionally, terms "comprising", "including", and any other variations thereof are intended to encompass a non-exclusive inclusion. For example, a process, method, system, product, or device that includes a series of steps or units not only includes the expressly listed steps or units but may also include other steps or units that are not expressly listed or are inherent to such a process, method, product, or device.

### Embodiment one

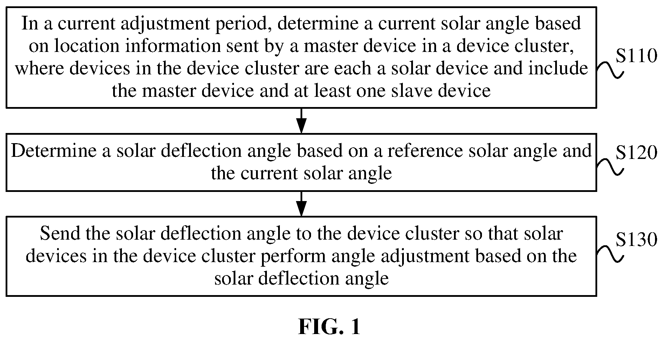

FIG. 1 is a flowchart of an angle adjustment method for a solar device according to embodiment one of the present application. This embodiment of the present application is applicable to the case of adjusting the angle of a solar device. For example, this embodiment is applicable to the case of adjusting the angle of a solar panel of a solar device to receive more sunlight. The method may be performed by an angle adjustment apparatus for a solar device. The angle adjustment apparatus for a solar device may be implemented in the form of hardware and/or software and may be configured in an electronic device. As shown in FIG. 1, the method includes S110 to S130.

In S110, in a current adjustment period, a current solar angle is determined based on location information sent by a master device in a device cluster, where devices in the device cluster are each a solar device and include the master device and at least one slave device.

The current adjustment period may be determined based on actual conditions. The determination principle may be to avoid an excessively long current adjustment period that causes the angle of the solar device to fail to be adjusted in time and affects the absorption of sunlight, and to avoid an excessively short current adjustment period that causes frequent adjustments and very small adjustment amplitudes each time, wasting energy and power consumption. The master device may be selected from at least one solar device in the device cluster. The master device sends keep-alive information to an angle adjustment device for a solar device, and the keep-alive information may carry location information of the master device. The slave device may also send keep-alive information to an angle adjustment device for a solar device. The angle adjustment device for a solar device may be a server. The solar device may be a solar monitoring device including an image acquisition device and a solar panel.

In this embodiment of the present application, the angle adjustment device for a solar device may receive location information sent by the master device. When the current adjustment period arrives, the current solar angle is determined based on the most recently received location information. The current solar angle includes a solar azimuth angle and a solar altitude angle. The solar azimuth angle is the angle between the projection of sunlight on the horizontal plane and the local meridian, which may be approximately regarded as the angle between the shadow of a vertical line standing on the ground under sunlight and due south. The solar altitude angle is the angle between the incident direction of sunlight and the horizontal plane.

In this embodiment of the present application, the slave device may also send keep-alive information carrying location information to the angle adjustment device for a solar device, but the angle adjustment device for a solar device does not use such location information to determine the current solar angle, and only uses location information of the representative master device to determine the current solar angle, thereby effectively reducing computational power consumption and energy consumption, and further improving angle adjustment efficiency and response speed.

In this embodiment of the present application, the process for determining the current adjustment period includes the following: If the solar altitude angle in the current solar angle is greater than zero, the current adjustment period is determined based on a time difference corresponding to a unit angle deflection of the solar angle; if the solar altitude angle in the current solar angle is not greater than zero, the current adjustment period is determined as a preset duration, where the preset duration is greater than the time difference corresponding to the unit angle deflection of the solar angle.

Exemplarily, if the solar altitude angle in the current solar angle is greater than zero, it indicates that the sun is above the horizontal plane and it is currently daytime. The current adjustment period may be determined based on the time difference corresponding to the unit angle deflection of the solar angle. For example, the solar azimuth angle rotates 15 degrees per hour, or 1 degree every 4 minutes on average. 1 degree may be used as the unit angle, with a corresponding time difference of 4 minutes, and 4 minutes is determined as the current adjustment period, so as to adjust the angle of the solar device in time when the sun deflects significantly, enabling the solar device to maximize the reception of solar energy. The unit angle may also be set to other angles, determined based on the principle of the minimum angle that significantly affects the amount of solar energy received by the solar device. If the solar altitude angle in the current solar angle is less than or equal to zero, it indicates that the sun is below the horizontal plane and it is currently nighttime, at which time the solar device cannot receive solar energy. Therefore, the current adjustment period may be set to a preset duration greater than the time difference corresponding to the unit angle deflection of the solar angle, for example, 30 minutes, 1 hour, or 2 hours, to appropriately extend the current adjustment period and avoid frequent angle calculations and adjustments that waste power consumption.

In S120, a solar deflection angle is determined based on a reference solar angle and the current solar angle.

The reference solar angle may be determined based on actual conditions, for example, the solar angle corresponding to the previous adjustment of the angle of the solar device. When the angle of the solar device is adjusted, it is necessary to determine how much angle to deflect based on the angle after the previous adjustment. The solar angle when the solar device directly faces the sun after the previous adjustment serves as the reference solar angle. The goal of this adjustment is to make the solar device directly face the current solar angle. The solar deflection angle is determined based on the difference between the current solar angle and the reference solar angle, which indicates how much angle the current solar device needs to deflect based on the angle after the previous adjustment to directly face the sun. A deflection azimuth angle in the solar deflection angle may be determined based on the solar azimuth angle in the reference solar angle and the solar azimuth angle in the current solar angle. A deflection altitude angle in the solar deflection angle may be determined based on the solar altitude angle in the reference solar angle and the solar altitude angle in the current solar angle. The deflection azimuth angle is used for adjusting the angle of the solar device in a horizontal direction, and the deflection altitude angle is used for adjusting the pitch angle of the solar device so that the solar panel of the solar device faces the sun as directly as possible and absorbs as much solar energy as possible. The deflection azimuth angle and deflection altitude angle may be calculated simultaneously, or only the deflection azimuth angle may be calculated to adjust the angle of the solar device in the horizontal direction, or only the deflection altitude angle may be calculated to adjust the pitch angle of the solar device, which is not limited herein and may be determined based on user requirements.

In S130, the solar deflection angle is sent to the device cluster so that solar devices in the device cluster perform angle adjustment based on the solar deflection angle.

Exemplarily, the adjustment device for a solar device sends the solar deflection angle to the device cluster. The device cluster calculates the angle that the solar devices need to rotate based on the solar deflection angle, and then controls the solar devices to rotate based on the required rotation angle. The angle adjustment device for a solar device may correspond to at least one device cluster. When the angle adjustment device for a solar device corresponds to at least two device clusters, the current adjustment periods corresponding to different device clusters may be different, and the times at which the angle adjustment device for a solar device sends the solar deflection angle to different device clusters may also be different.

If the current adjustment period is before 12:00 noon and the deflection azimuth angle is greater than zero, it is determined that the solar panel of the solar device needs to be adjusted in the horizontal direction from west to east. If the deflection azimuth angle is less than zero, it is determined that the solar panel of the solar device needs to be adjusted from east to west in the horizontal direction. If the deflection azimuth angle is zero, it is determined that no adjustment is required for the solar panel of the solar device. If the current adjustment period is after noon and the deflection azimuth angle is greater than zero, it is determined that the solar panel of the solar device needs to be adjusted from east to west in the horizontal direction. If the deflection azimuth angle is less than zero, it is determined that the solar panel of the solar device needs to be adjusted from west to east. If the deflection azimuth angle is zero, no adjustment is required for the solar panel of the solar device in the horizontal direction. If the deflection altitude angle is greater than zero, it is determined that the pitch angle of the solar panel of the solar device needs to be decreased. If the deflection altitude angle is less than zero, it is determined that the pitch angle of the solar panel of the solar device needs to be increased. If the deflection altitude angle is zero, no adjustment is required for the pitch angle of the solar panel of the solar device. The preceding solution enables multiple solar devices in the device cluster to execute the adjustment when the angle adjustment device for a solar device sends the solar deflection angle to the device cluster.

According to the technical solutions of the embodiments of the present application, in a current adjustment period, a current solar angle is determined based on location information sent by a master device in a device cluster, where devices in the device cluster are each a solar device and include the master device and at least one slave device; a solar deflection angle is determined based on a reference solar angle and the current solar angle; and the solar deflection angle is sent to the device cluster so that solar devices in the device cluster perform angle adjustment based on the solar deflection angle. In the preceding solutions, the solar deflection angle can be determined based on location information sent by the master device, and angles of all solar devices in the entire device cluster can be uniformly adjusted based on the solar deflection angle, without the need to configure a processor or an additional device in each solar device for angle adjustment and calculation, thereby saving hardware cost and energy consumption.

### Embodiment two

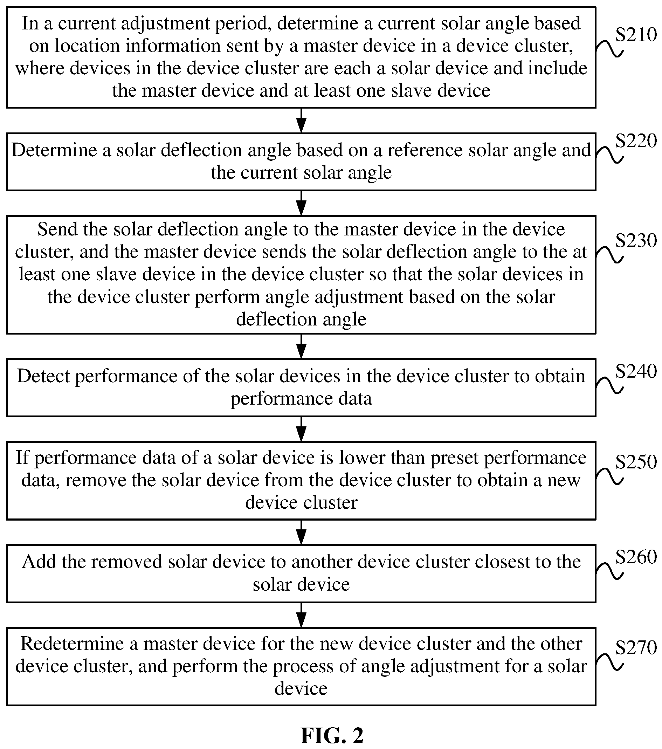

FIG. 2 is a flowchart of an angle adjustment method for a solar device according to embodiment two of the present application. This embodiment is described based on the preceding embodiment. For solutions not described in this embodiment, reference is made to the preceding embodiment. As shown in FIG. 2, the method of this embodiment includes S210 to S270.

In S210, in a current adjustment period, a current solar angle is determined based on location information sent by a master device in a device cluster, where devices in the device cluster are each a solar device and include the master device and at least one slave device.

In this embodiment of the present application, the process for determining the device cluster includes selecting a reference solar device from all solar devices, and determining a preset range with the reference solar device as the center; and forming the device cluster with solar devices located within the preset range.

Exemplarily, when the solar deflection angle is determined, the current solar angle needs to be determined based on location information sent by the master device, and the solar deflection angle needs to be calculated. The solar deflection angle serves as the reference for angle adjustment of the entire device cluster. At least two solar devices with close locations may be selected to form a device cluster, thereby achieving unified adjustment and improving adjustment efficiency. A solar device that does not belong to any device cluster may be selected as the reference solar device. A preset range is determined with this device as the center. The shape of the preset range is not limited and may be circular, rectangular, or irregular. The relative positions of the solar devices and the preset range are determined based on the latitudes and longitudes of the solar devices. All solar devices within the preset range, including the reference solar device, are grouped into a cluster. All solar devices in a target area may be grouped to device clusters using this method until all solar devices are included in device clusters, so as to achieve unified management and adjustment and improve management efficiency.

In this embodiment of the present application, the manner for determining the master device includes determining a median latitude and a median longitude of the solar devices in the device cluster, and selecting the master device from the device cluster based on latitudes, longitudes, the median latitude, and the median longitude of the solar devices in the device cluster.

When angle adjustment is performed on the device cluster, the current solar angle is determined using location information of the master device, and then the solar deflection angle is calculated for angle adjustment of the solar devices in the entire device cluster. Therefore, location information of the master device needs to be representative and close to the positions of other slave devices so that ideal effects can also be achieved when the slave devices perform angle adjustment based on the solar deflection angle. In this embodiment of the present application, the maximum latitude and the minimum latitude may be determined from latitudes of all solar devices in the device cluster, and the median latitude is determined as follows: M1 = (Mmax + Mmin)/2, where Mmax denotes the maximum latitude, and Mmin denotes the minimum latitude. The maximum longitude and the minimum longitude are determined from longitudes of all solar devices, and the median longitude is determined as follows: N1 = (Nmax + Nmin)/2, where Nmax denotes the maximum longitude, and Nmin denotes the minimum longitude. The median latitude and median longitude reflect a position close to the center of the device cluster. A solar device close to the center may be selected as the master device based on latitudes, longitudes, the median latitude, and the median longitude of all solar devices in the device cluster so that the master device is representative, and the solar deflection angle determined based on location information of the master device can be applied to angle adjustment of all solar devices in the device cluster.

In this embodiment of the present application, selecting the master device from the device cluster based on the latitudes, the longitudes, the median latitude, and the median longitude of the solar devices in the device cluster includes determining a latitude difference between a latitude of each solar device in the device cluster and the median latitude, and a longitude difference between a longitude of each solar device in the device cluster and the longitude median; performing weighted summation on the latitude difference and the longitude difference based on a weight corresponding to the latitude difference and a weight corresponding to the longitude difference, to obtain a location score corresponding to each solar device in the device cluster; and selecting the master device from the device cluster based on location scores corresponding to all the solar devices in the device cluster.

Exemplarily, for each solar device in the device cluster, the difference between the latitude of the solar device and the median latitude is determined as the latitude difference, and the difference between the longitude of the solar device and the median longitude is determined as the longitude difference. Weighted summation is performed on the latitude difference and the longitude difference based on the weight corresponding to the latitude difference and the weight corresponding to the longitude difference, to obtain the location score corresponding to the solar device, which indicates the degree to which the position of the solar device is close to the center of the device cluster. For example, P = aΔM + bΔN, where ΔM denotes the latitude difference, a denotes the weight corresponding to the latitude difference, ΔN denotes the longitude difference, and b denotes the weight corresponding to the longitude difference. Selecting the master device from the device cluster based on the location scores may include using the solar device corresponding to the smallest location score as the master device. The smallest location score indicates that the solar device is relatively close to the center of the device cluster, has a moderate position relative to other solar devices, can represent the position of the entire device cluster, and is representative. Therefore, the solar device corresponding to the smallest location score is selected as the master device so that the solar deflection angle calculated based on location information of the master device can be applied to angle adjustment of solar devices in the entire device cluster.

In this embodiment of the present application, the process for determining the weight corresponding to the latitude difference includes using the ratio of the unit change value of a solar azimuth angle to the total value of angle change as the weight corresponding to the latitude difference, where the total value of angle change is the sum of the unit change value of the solar azimuth angle and the unit change value of a solar altitude angle, the unit change value of the solar azimuth angle is the change value of the solar azimuth angle when latitudes differ by a unit latitude at the same time and the same longitude, and the unit change value of the solar altitude angle is the change value of the solar altitude angle when longitudes differ by a unit longitude at the same time and the same latitude. The process for determining the weight corresponding to the longitude difference includes using the ratio of the unit change value of the solar altitude angle to the total value of angle change as the weight corresponding to the longitude difference.

The value of the change in the solar azimuth angle caused by a change in longitude differs from the value of the change in the solar altitude angle caused by a change in latitude. At the same moment and at the same longitude, the change value of the solar azimuth angle when latitudes differ by one unit of latitude is different from the change value of the solar altitude angle when, at the same moment and at the same latitude, longitudes differ by one unit of longitude. For example, at the same moment and at the same longitude, when latitudes differ by 1 degree, the change value of the solar azimuth angle is θ1; at the same moment and at the same latitude, when longitudes differ by 1 degree, the change value of the solar altitude angle is θ2. The ratio of the unit change value of the solar azimuth angle to the total value of angle change may be used as the weight corresponding to the latitude difference, that is, a = θ1 / (θ1 + θ2). The ratio of the unit change value of the solar altitude angle to the total value of angle change may be used as the weight corresponding to the longitude difference, that is, b = θ2 / (θ1 + θ2). This indicates the influence of longitude difference and latitude difference on solar angle deviation.

In S220, a solar deflection angle is determined based on a reference solar angle and the current solar angle.

In S230, the solar deflection angle is sent to the master device in the device cluster, and the master device sends the solar deflection angle to the slave device in the device cluster so that the solar devices in the device cluster perform angle adjustment based on the solar deflection angle.

In this embodiment of the present application, the angle adjustment device for a solar device may send the solar deflection angle to the master device in the device cluster. The master device then sends the solar deflection angle to the slave devices in the device cluster so that all solar devices in the device cluster can receive the solar deflection angle and perform adaptive angle adjustment. Forwarding the solar deflection angle through the master device avoids the interaction between the angle adjustment device for a solar device and all solar devices, reduces communication complexity, and improves communication efficiency.

When the master device and slave devices send keep-alive information to the angle adjustment device for a solar device, communication addresses are carried. When the angle adjustment device for a solar device sends the solar deflection angle to the master device, communication addresses of the slave devices are also sent so that the master device sends the solar deflection angle to the slave devices based on the communication addresses.

In S240, performance of the solar devices in the device cluster is detected to obtain performance data.

Performance data of the solar devices may include solar light intensity received by the solar devices, charging efficiency for loads, amount of electric energy converted, and other data. In this embodiment of the present application, after angle adjustment of the solar devices in the device cluster based on the solar deflection angle, performance of all solar devices in the device cluster may be detected to obtain performance data, so as to evaluate solar collection performance of the solar devices after angle adjustment.

In S250, if performance data of a solar device is lower than preset performance data, the solar device is removed from the device cluster to obtain a new device cluster.

Exemplarily, if performance data of a solar device is lower than preset performance data, it indicates that the solar device has not achieved the desired solar reception effect. The solar deflection angle determined based on location information of the master device in the device cluster is not applicable to angle adjustment of this solar device. Therefore, the solar device may be removed from the device cluster to obtain a new device cluster.

In S260, the removed solar device is added to another device cluster closest to the solar device.

Exemplarily, the removed solar device is added to another device cluster closest to the solar device so that unified adjustment along with the device cluster can also be achieved for the removed solar device.

In S270, a master device is redetermined for the new device cluster and the other device cluster, and the process of angle adjustment for a solar device is performed.

Exemplarily, for the new device cluster obtained after the removal of the solar device and the other device cluster that has added the removed solar device, a master device is redetermined for each cluster, and the following process is performed: determining a current solar angle based on location information of the master device, determining a solar deflection angle based on a reference solar angle and the current solar angle, and sending the solar deflection angle to the device cluster so that the solar devices in the device cluster perform angle adjustment based on the solar deflection angle. After reorganization of the device cluster, the solar deflection angle determined based on location information of the master device can be applied to angle adjustment of all solar devices in the device cluster.

This embodiment of the present application provides an angle adjustment method for a solar device. The solar deflection angle is sent to the master device in the device cluster, and then sent by the master device to the slave devices in the device cluster so that the solar devices in the device cluster perform angle adjustment based on the solar deflection angle. This method enables all solar devices in the device cluster to receive the solar deflection angle and perform adaptive angle adjustment. Moreover, forwarding the solar deflection angle through the master device avoids the interaction between the angle adjustment device for a solar device and all solar devices, reduces communication complexity, and improves communication efficiency. Performance of the solar devices in the device cluster is detected to obtain performance data. If performance data of a solar device is lower than preset performance data, the solar device is removed from the device cluster to obtain a new device cluster. The removed solar device is added to another device cluster closest to the solar device. A master device is redetermined for the new device cluster and the other device cluster, and the process of angle adjustment for a solar device is performed. In this manner, after reorganization of the device cluster, the solar deflection angle determined based on location information of the master device in the reorganized device cluster can be applied to angle adjustment of all solar devices in the device cluster.

In this embodiment of the present application, the method also includes, for a solar device whose performance data is lower than preset performance data, determining a current solar angle based on location information of the solar device, determining a solar deflection angle based on the current solar angle and a reference solar angle, and sending the solar deflection angle to the solar device so that the solar device performs angle adjustment based on the solar deflection angle.

Exemplarily, if performance data of a solar device is lower than preset performance data, it indicates that the solar deflection angle determined based on location information of the master device is not applicable to angle adjustment of this solar device. For a solar device whose performance data is lower than preset performance data, the angle adjustment device for a solar device may separately determine the current solar angle based on location information of the solar device, determine the solar deflection angle based on the current solar angle and the reference solar angle, and send the solar deflection angle to the solar device. The solar device then performs angle adjustment based on the solar deflection angle determined based on its location information to achieve the desired solar reception effect.

### Embodiment three

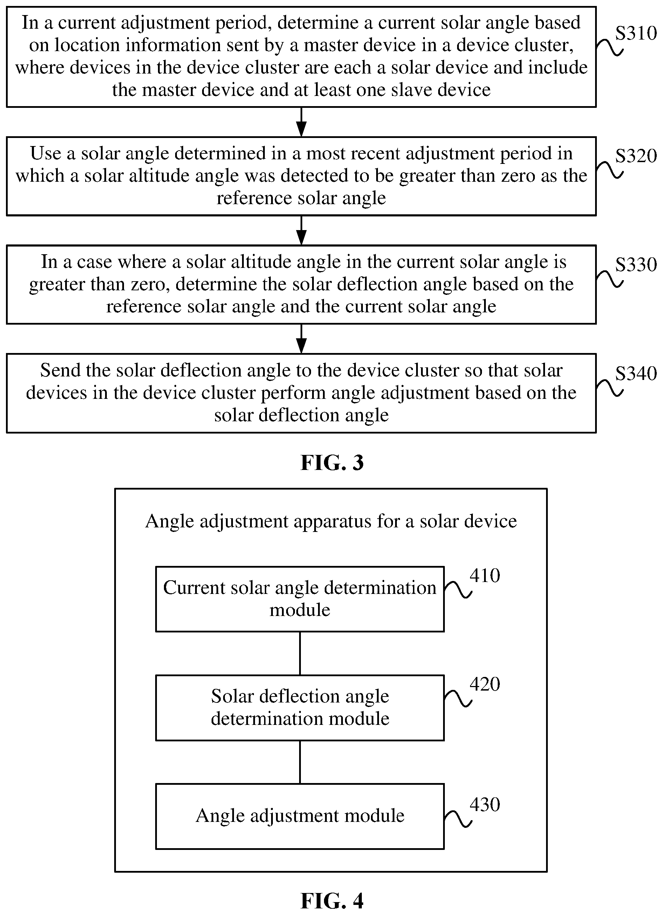

FIG. 3 is a flowchart of an angle adjustment method for a solar device according to embodiment three of the present application. This embodiment is described based on the preceding embodiments. For solutions not described in this embodiment, reference is made to the preceding embodiments. As shown in FIG. 3, the method of this embodiment includes S310 to S340.

In S310, in a current adjustment period, a current solar angle is determined based on location information sent by a master device in a device cluster, where devices in the device cluster are each a solar device and include the master device and at least one slave device.

In S320, a solar angle determined in a most recent adjustment period in which a solar altitude angle was detected to be greater than zero is used as the reference solar angle.

Exemplarily, if the solar altitude angle in the current solar angle determined in the current adjustment period is greater than zero, it is determined that it is currently daytime. If the solar altitude angle is less than or equal to zero, it is determined that it is currently nighttime. The reference solar angle reflects the solar angle corresponding to the previous angle adjustment of the solar device. During daytime, continuous angle adjustment of the solar device may be required. If the solar altitude angle in the current adjustment period is greater than zero and the solar altitude angle in the previous adjustment period is greater than zero, the solar angle determined in the previous adjustment period is used as the reference solar angle. If the solar altitude angle in the current adjustment period is greater than zero and the solar altitude angle in the previous adjustment period is less than or equal to zero, it indicates that no angle adjustment was performed for the solar device in the previous adjustment period, and the last angle adjustment was performed in the adjustment period in which a solar altitude angle greater than zero was last detected. Therefore, the solar angle in the most recent adjustment period in which a solar altitude angle was detected to be greater than zero is used as the reference solar angle. The solar deflection angle is determined based on the reference solar angle and the current solar angle to determine how much further rotation is needed based on the angle after adjustment in the adjustment period in which a solar altitude angle greater than zero was last detected. If the solar altitude angle in the current adjustment period is less than or equal to zero, that is, it is nighttime and no angle adjustment is required for the solar device, the solar angle determined in the most recent adjustment period in which a solar altitude angle was detected to be greater than zero is used as the reference solar angle. In this case, the reference solar angle is only recorded and not used for calculation so that it can be used later when the solar altitude angle in the current adjustment period is greater than zero again and the solar altitude angle in the previous adjustment period is less than or equal to zero.

In S330, in a case where a solar altitude angle in the current solar angle is greater than zero, the solar deflection angle is determined based on the reference solar angle and the current solar angle.

Exemplarily, if the solar altitude angle in the current solar angle is greater than zero, it is determined that it is currently daytime with sunlight available, and angle adjustment needs to be performed for the solar device. Therefore, the solar deflection angle may be determined based on the reference solar angle and the current solar angle. If the solar altitude angle in the current solar angle is less than or equal to zero, it indicates nighttime, and no angle adjustment is performed to save power consumption.

In S340, the solar deflection angle is sent to the device cluster so that solar devices in the device cluster perform angle adjustment based on the solar deflection angle.

This embodiment of the present application provides an angle adjustment method for a solar device. In a current adjustment period, a current solar angle is determined based on location information sent by a master device in a device cluster. The solar angle determined in the most recent adjustment period in which a solar altitude angle was detected to be greater than zero is used as the reference solar angle. If the solar altitude angle in the current solar angle is greater than zero, a solar deflection angle is determined based on the reference solar angle and the current solar angle. This method enables adaptive determination of the reference solar angle for daytime when angle adjustment is required and nighttime when no adjustment is required, facilitating determination of the solar deflection angle with this as the reference. Moreover, angle adjustment is performed when the solar altitude angle in the current solar angle is detected to be greater than zero, and no calculation or detection is performed at night, thereby saving power consumption.

### Embodiment four

FIG. 4 is a diagram illustrating the structure of an angle adjustment apparatus for a solar device according to embodiment four of the present application. The apparatus may perform the angle adjustment method for a solar device provided in any embodiment of the present application and includes functional modules corresponding to the method. As shown in FIG. 4, the apparatus includes a current solar angle determination module 410, a solar deflection angle determination module 420, and an angle adjustment module 430. The current solar angle determination module 410 is configured to, in a current adjustment period, determine a current solar angle based on location information sent by a master device in a device cluster, where devices in the device cluster are each a solar device and include the master device and at least one slave device. The solar deflection angle determination module 420 is configured to determine a solar deflection angle based on a reference solar angle and the current solar angle. The angle adjustment module 430 is configured to send the solar deflection angle to the device cluster so that solar devices in the device cluster perform angle adjustment based on the solar deflection angle.

In this embodiment of the present application, the apparatus also includes a preset range determination module and a device cluster construction module. The preset range determination module is configured to select a reference solar device from all solar devices, and determine a preset range with the reference solar device as the center. The device cluster construction module is configured to form the device cluster with solar devices located within the preset range.

In this embodiment of the present application, the apparatus also includes a median determination module and a master device selection module. The median determination module is configured to determine a median latitude and a median longitude of the solar devices in the device cluster. The master device selection module is configured to select the master device from the device cluster based on latitudes, longitudes, the median latitude, and the median longitude of the solar devices in the device cluster.

In this embodiment of the present application, the master device selection module includes a difference determination submodule, a location score determination submodule, and a selection submodule. The difference determination submodule is configured to determine a latitude difference between a latitude of each solar device in the device cluster and the median latitude, and a longitude difference between a longitude of each solar device in the device cluster and the longitude median. The location score determination submodule is configured to perform weighted summation on the latitude difference and the longitude difference based on a weight corresponding to the latitude difference and a weight corresponding to the longitude difference, to obtain a location score corresponding to each solar device in the device cluster. The selection submodule is configured to select the master device from the device cluster based on location scores corresponding to all the solar devices in the device cluster.

In this embodiment of the present application, the apparatus also includes a first weight determination module and a second weight determination module. The first weight determination module is configured to use the ratio of the unit change value of a solar azimuth angle to the total value of angle change as the weight corresponding to the latitude difference, where the total value of angle change is the sum of the unit change value of the solar azimuth angle and the unit change value of a solar altitude angle, the unit change value of the solar azimuth angle is the change value of the solar azimuth angle when latitudes differ by a unit latitude at the same time and the same longitude, and the unit change value of the solar altitude angle is the change value of the solar altitude angle when longitudes differ by a unit longitude at the same time and the same latitude.

The second weight determination module is configured to use the ratio of the unit change value of the solar altitude angle to the total value of angle change as the weight corresponding to the longitude difference.

In this embodiment of the present application, the solar deflection angle determination module 420 includes a reference solar angle determination unit and a deflection angle determination unit. The reference solar angle determination unit is configured to, in the current adjustment period, use a solar angle determined in a most recent adjustment period in which a solar altitude angle was detected to be greater than zero as the reference solar angle. The deflection angle determination unit is configured to, in a case where a solar altitude angle in the current solar angle is greater than zero, determine the solar deflection angle based on the reference solar angle and the current solar angle.

In this embodiment of the present application, the apparatus also includes a current adjustment period determination module configured to, if the solar altitude angle in the current solar angle is greater than zero, determine the current adjustment period based on a time difference corresponding to a unit angle deflection of the solar angle; if the solar altitude angle in the current solar angle is less than or equal to zero, determine the current adjustment period as a preset duration, where the preset duration is greater than the time difference corresponding to the unit angle deflection of the solar angle.

In this embodiment of the present application, the angle adjustment module 430 includes a sending unit configured to send the solar deflection angle to the master device in the device cluster, and send, by the master device, the solar deflection angle to the slave device in the device cluster so that the solar devices in the device cluster perform angle adjustment based on the solar deflection angle.

In this embodiment of the present application, the apparatus also includes a detection module, a removal module, an addition module, and a re-execution module. The detection module is configured to detect performance of the solar devices in the device cluster to obtain performance data. The removal module is configured to, if performance data of a solar device is lower than preset performance data, remove the solar device from the device cluster to obtain a new device cluster. The addition module is configured to add the removed solar device to another device cluster closest to the solar device. The re-execution module is configured to redetermine a master device for the new device cluster and the other device cluster, and perform the process of angle adjustment for a solar device.

The angle adjustment apparatus for a solar device provided in this embodiment of the present application may perform the angle adjustment method for a solar device provided in any embodiment of the present application and includes functional modules corresponding to the method.

### Embodiment five

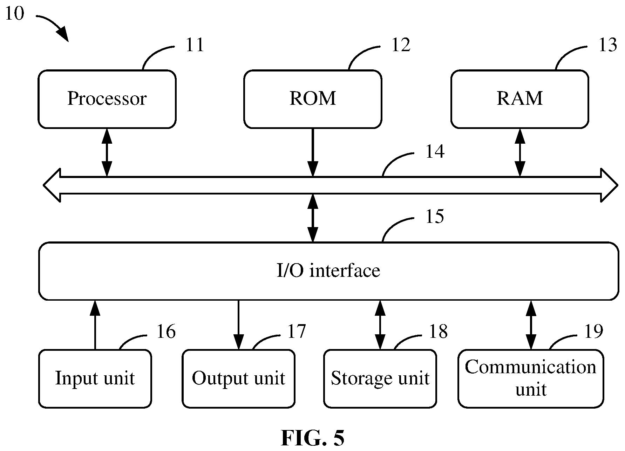

FIG. 5 is a diagram illustrating the structure of an electronic device 10 that may be used to implement the embodiments of the present application. The electronic device is intended to represent various forms of digital computers, for example, a laptop computer, a desktop computer, a worktable, a personal digital assistant, a server, a blade server, a mainframe computer, or other applicable computers. The electronic device may also represent various forms of mobile apparatuses such as a personal digital processing apparatus, a cellular phone, a smart phone, a wearable device (for example, a helmet, glasses, and a watch), and other similar computing apparatuses. The components shown herein, their connections and relationships, and their functions, are by way of examples only and are not intended to limit implementations of the present application described and/or claimed herein.

As shown in FIG. 5, the electronic device 10 includes at least one processor 11 and a memory communicatively connected to the at least one processor 11, such as a read-only memory (ROM) 12 and a random-access memory (RAM) 13. The memory stores a computer program executable by the at least one processor. The processor 11 may perform various appropriate actions and processes based on computer programs stored in a ROM 12 or loaded from a storage unit 18 into a RAM 13. The RAM 13 may also store multiple programs and data required for the operation of the electronic device 10. The processor 11, the ROM 12, and the RAM 13 are connected to each other through a bus 14. An input/output (I/O) interface 15 is also connected to the bus 14.

Multiple components in the electronic device 10 are connected to the I/O interface 15, including an input unit 16, such as a keyboard or a mouse; an output unit 17, such as multiple types of displays or speakers; a storage unit 18, such as a magnetic disk or an optical disk; and a communication unit 19, such as a network card, a modem, or a wireless communication transceiver. The communication unit 19 allows the electronic device 10 to exchange information/data with other devices through a computer network such as the Internet and/or multiple telecommunication networks.

The processor 11 may be multiple general-purpose and/or special-purpose processing components having processing and computing capabilities. Some examples of the processor 11 include but are not limited to, a central processing unit (CPU), a graphics processing unit (GPU), multiple dedicated artificial intelligence (AI) computing chips, multiple processors running machine learning model algorithms, a digital signal processor (DSP), and any suitable processors, controllers, and microcontrollers. The processor 11 performs the various methods and processes described above, for example, the angle adjustment method for a solar device.

In some embodiments, the angle adjustment method for a solar device may be implemented as a computer program tangibly embodied in a computer-readable storage medium, such as the storage unit 18. In some embodiments, part or all of the computer program may be loaded and/or installed on the electronic device 10 via the ROM 12 and/or the communication unit 19. When the computer program is loaded into the RAM 13 and executed by the processor 11, one or more steps of the angle adjustment method for a solar device described above may be performed. Optionally, in other embodiments, the processor 11 may be configured to perform the angle adjustment method for a solar device in any other appropriate manner (for example, by means of firmware).

Multiple implementations of the systems and techniques described above in the present application may be implemented in a digital electronic circuit system, an integrated circuit system, a field programmable gate array (FPGA), an application specific integrated circuit (ASIC), an application specific standard product (ASSP), a system on chip system (SOC), a complex programmable logic device (CPLD), computer hardware, firmware, software, and/or combinations thereof. These multiple implementations may include an implementation in one or more computer programs that may be executable and/or interpretable on a programmable system including at least one programmable processor. The programmable processor may be special-purpose or general-purpose for receiving data and instructions from a memory system, at least one input apparatus, and at least one output apparatus and transmitting the data and instructions to the memory system, the at least one input apparatus, and the at least one output apparatus.

The computer program for implementing the method of the present application may be written in any combination of one or more programming languages. These computer programs may be provided to a processor of a general-purpose computer, a special-purpose computer, or other programmable angle adjustment apparatus for a solar device such that the computer programs, when executed by the processor, cause the functions/operations specified in flowcharts and/or block diagrams to be implemented. The computer program may be executed entirely or partly on the machine, as a stand-alone software package partly on the machine and partly on a remote machine, or entirely on the remote machine or server.

In the context of the present application, a computer-readable storage medium may be a tangible medium that may contain or store a computer program for use by or in conjunction with an instruction execution system, apparatus, or device. The computer-readable storage medium may include, but is not limited to, electronic, magnetic, optical, electromagnetic, infrared, or semiconductor systems, apparatuses, or devices, or any suitable combination thereof. Optionally, the computer-readable storage medium may be a machine-readable signal medium. More specific examples of machine-readable storage medium may include an electrical connection having one or more wires, a portable computer magnetic disk, a hard disk, a RAM, a ROM, an erasable programmable read-only memory (EPROM) or a flash memory, an optical fiber, a portable compact disc read-only memory (CD-ROM), an optical storage device, a magnetic storage device, or any suitable combination thereof.

To provide interaction with a user, the systems and techniques described herein may be implemented on an electronic device. The electronic device has a display apparatus (for example, a CRT (cathode ray tube) or an LCD (liquid crystal display) monitor) for displaying information to a user; and a keyboard and pointing apparatus (for example, a mouse or a trackball) through which a user can provide input to the electronic device. Other types of apparatuses may also be used for providing interaction with a user. For example, feedback provided for the user may be sensory feedback in any form (for example, visual feedback, auditory feedback, or haptic feedback). Moreover, input from the user may be received in any form (including acoustic input, voice input, or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein), or a computing system including any combination of such back-end, middleware, or front-end components. Components of a system may be interconnected by any form or medium of digital data communication (for example, a communication network). Examples of the communication network include a local area network (LAN), a wide area network (WAN), a blockchain network, and the Internet.

The computing system may include a client and a server. A client and a server are generally remote from each other and typically interact through a communication network. The relationship between the client and the server arises by virtue of computer programs running on respective computers and having a client-server relationship to each other. The server, which may be a cloud server and is also referred to as a cloud computing server or a cloud host, is a host product in a cloud computing service system. The server solves the problems of difficult management and weak service scalability in the service of a related physical host and a related virtual private server (VPS).

It is to be understood that multiple forms of processes shown above may be adopted with steps reordered, added, or deleted. For example, the steps described in the present application may be performed in parallel, sequentially, or in different orders, as long as the desired results of the technical solutions of the present application can be achieved, and no limitation is imposed herein.

## Claims

1. An angle adjustment method for a solar device, comprising:
in a current adjustment period, determining a current solar angle based on location information sent by a master device in a device cluster, wherein devices in the device cluster are each a solar device and comprise the master device and at least one slave device;
determining a solar deflection angle based on a reference solar angle and the current solar angle; and
sending the solar deflection angle to the device cluster so that solar devices in the device cluster perform angle adjustment based on the solar deflection angle.

2. The angle adjustment method according to claim 1, wherein a process for determining the device cluster comprises:
selecting a reference solar device from all solar devices, and determining a preset range with the reference solar device as a center; and
forming the device cluster with solar devices located within the preset range.

3. The angle adjustment method according to claim 1, wherein a manner for determining the master device comprises:
determining a median latitude and a median longitude of the solar devices in the device cluster; and
selecting the master device from the device cluster based on latitudes, longitudes, the median latitude, and the median longitude of the solar devices in the device cluster.

4. The angle adjustment method according to claim 3, wherein selecting the master device from the device cluster based on the latitudes, the longitudes, the median latitude, and the median longitude of the solar devices in the device cluster comprises:
determining a latitude difference between a latitude of each solar device in the device cluster and the median latitude, and a longitude difference between a longitude of each solar device in the device cluster and the longitude median;
performing weighted summation on the latitude difference and the longitude difference based on a weight corresponding to the latitude difference and a weight corresponding to the longitude difference, to obtain a location score corresponding to each solar device in the device cluster; and
selecting the master device from the device cluster based on location scores corresponding to all the solar devices in the device cluster.

5. The angle adjustment method according to claim 4, wherein a process for determining the weight corresponding to the latitude difference comprises:
using a ratio of a unit change value of a solar azimuth angle to a total value of angle change as the weight corresponding to the latitude difference;
wherein the total value of angle change is a sum of the unit change value of the solar azimuth angle and a unit change value of a solar altitude angle, the unit change value of the solar azimuth angle is a change value of the solar azimuth angle when latitudes differ by a unit latitude at a same time and a same longitude, and the unit change value of the solar altitude angle is a change value of the solar altitude angle when longitudes differ by a unit longitude at a same time and a same latitude; and
a process for determining the weight corresponding to the longitude difference comprises:
using a ratio of the unit change value of the solar altitude angle to the total value of angle change as the weight corresponding to the longitude difference.

6. The angle adjustment method according to claim 1, wherein determining the solar deflection angle based on the reference solar angle and the current solar angle comprises:
in the current adjustment period, using a solar angle determined in a most recent adjustment period in which a solar altitude angle was detected to be greater than zero as the reference solar angle; and
in a case where a solar altitude angle in the current solar angle is greater than zero, determining the solar deflection angle based on the reference solar angle and the current solar angle.

7. The angle adjustment method according to claim 1, wherein sending the solar deflection angle to the device cluster so that the solar devices in the device cluster perform angle adjustment based on the solar deflection angle comprises:
sending the solar deflection angle to the master device in the device cluster, and sending, by the master device, the solar deflection angle to the at least one slave device in the device cluster so that the solar devices in the device cluster perform angle adjustment based on the solar deflection angle.

8. An angle adjustment apparatus for a solar device, comprising:
a current solar angle determination module configured to, in a current adjustment period, determine a current solar angle based on location information sent by a master device in a device cluster, wherein devices in the device cluster are each a solar device and comprise the master device and at least one slave device;
a solar deflection angle determination module configured to determine a solar deflection angle based on a reference solar angle and the current solar angle; and
an angle adjustment module configured to send the solar deflection angle to the device cluster so that solar devices in the device cluster perform angle adjustment based on the solar deflection angle.

9. An electronic device, comprising:
at least one processor; and
a memory communicatively connected to the at least one processor; wherein
the memory stores a computer program executable by the at least one processor, and the computer program is configured to, when executed by the at least one processor, cause the at least one processor to perform the angle adjustment method for a solar device according to any one of claims 1 to 7.

10. A computer-readable storage medium storing computer instructions that, when executed by a processor, cause the processor to perform the angle adjustment method for a solar device according to any one of claims 1 to 7.
